# EUROPEAN PATENT APPLICATION

(11) **EP 4 459 502 A1**
(43) Date of publication of application: **06.11.2024**
(21) Application number: 23218814.4
(22) Date of filing: 20.12.2023
(51) Int. Cl.: G06K 19/077

(54) **PRODUCT INFORMATION IDENTIFICATION AND SEALED PRODUCT ENSURING SYSTEM**

(30) Priority: 05.05.2023 TW 112116892
(71) Applicant: Chuang, Lien Hao, Kaohsiung City 806 (TW)
(72) Inventor: Chuang, Lien Hao, Kaohsiung City 806 (TW)
(74) Representative: Lang, Christian

(57) **Abstract**

A product information identification and sealed product ensuring system consists essentially of an electronic label seal and an information reading device. The electronic label seal is mainly composed of a conductive loop antenna. An information reading device can sense the electronic label seal through near-field communication, and obtain a unique identification code of the electronic label seal and a link it carries. The information reading device can execute the link and obtain a product information corresponding to the electronic label seal. Additionally, a special adhesive is used to print a circuit antenna of the electronic label seal, so that the electronic label seal is for one-time use only. After the circuit antenna is torn off, connection between the circuit antenna and a chip is damaged, resulting in loss of its original sealing characteristic. This makes it especially suitable for a product that requires anti-counterfeiting, original factory-sealed condition maintenance and expiration date preservation.

## Description

### BACKGROUND OF INVENTION

### FIELD OF THE PRESENT DISCLOSURE

The present disclosure relates particularly to a product information identification and sealed product ensuring system that uses an electronic label seal that can ensure a sealed state and can be read by an information device to obtain a product information.

### BRIEF DESCRIPTION OF RELATED ART

Typically, a product information such as a product name, ingredients, a manufacturer, a manufacturing date, and an expiration date is listed on a paper label of a general product. A consumer can often visually check the product information from the paper label on a package of the product. However, many products have smaller sizes. When the paper label presenting the product information needs to fit a small-sized product, a font size in which the product information is printed can only be reduced accordingly. Thus, the consumer often cannot clearly see the product information. In addition, in the product information, especially for cosmetics, medicines, health supplements, and edible products, the manufacturing date and the expiration date are crucial. This is because if the expiration date has passed and the consumer does not realize it, the consumer can easily consume an expired product by mistake, causing harm to health.

Moreover, there is another type of products that needs to be ensured to be unopened before use because of expiration dates or usage restrictions. In addition to safety considerations that may need to be taken into account, it is also possible that users are not allowed to disassemble products themselves. For example, for high-priced alcoholic beverages and medicines, it is necessary to ensure that they have not been opened before use. For another example, for many electronic and information products, in order to prevent consumers from disassembling them to maliciously replace or damage components, "Do Not Open" warning stickers are usually affixed to their necessary assemblies or packages, indicating that once they are opened, the warranty will be voided.

Based on the above, there are clear requirements for using label seals that can present product informations for the relevant types of products. The requirements include presenting the product informations clearly and ensuring that the relevant types of products are unopened before use. However, as for an expiration date of a product, a consumer can only rely on him/herself to be attentive before use. If he/she fails to do so, he/she needs to take responsibility for subsequent damages incurred.

According to the above, the problems currently desired to be solved are how to effectively solve the problems that the traditional paper label presents unclearly, and is required to ensure a sealed state to be indicated and to provide detailed production history and warranty content of a product to a user, and how to also meet a demand of proactively reminding the user of an expiration date of the product.

### SUMMARY OF INVENTION

In view of the aforementioned problems, a main object of the present disclosure is to provide a product information identification and sealed product ensuring system that can present a product information, indicate seal validity, and proactively remind of an expiration date of a product using a multimedia message (text, an image, a video, sound, etc.).

In order to achieve the aforementioned object, the present disclosure mainly uses an electronic label seal as an information carrier. Also, the electronic label seal uses a circuit antenna printed using a special adhesive and a conductive loop antenna, and a chip to establish electrical bridging for the electronic label seal, causing the electronic label seal to be in a conductive circuit state normally. In addition, the circuit antenna has a "one-time-use" property. If the electronic label seal, after being attached, is torn off, the entire electronic label seal, being open circuited, enters an invalid state. In this way, for a product that is sealed by employing the present disclosure, effective generation of an indication of a sealed state is achieved. That is, once the electronic label seal is torn (e.g., a bottle is opened), it indicates that a sealed state has been released, allowing a consumer to visually confirm that the product has been opened. Moreover, from reading the electronic label seal through near-field sensing, an information reading device can obtain a unique identification code and a link. In response to the link being executed by the information reading device, a product information can be seen on a display screen of the information reading device. Furthermore, by using the information reading device, an information about an expiration date of the product can be played to remind the consumer of the expiration date of the product. In this way, the aforementioned object of the present disclosure is achieved.

### BRIEF DESCRIPTION OF THE DRAWINGS

FIG. 1 is a system architecture diagram of the present disclosure.
FIG. 2 is a schematic diagram illustrating components of the present disclosure.
FIG. 3 is a first schematic diagram illustrating an embodiment of the present disclosure.
FIG. 4 is a second schematic diagram illustrating an embodiment of the present disclosure.
FIG. 5 is a third schematic diagram illustrating an embodiment of the present disclosure.
FIG. 6 is a fourth schematic diagram illustrating an embodiment of the present disclosure.
FIG. 7 is a first diagram illustrating another embodiment of the present disclosure.
FIG. 8 is a second diagram illustrating another embodiment of the present disclosure.

### DETAILED DESCRIPTION OF PREFERRED EMBODIMENTS

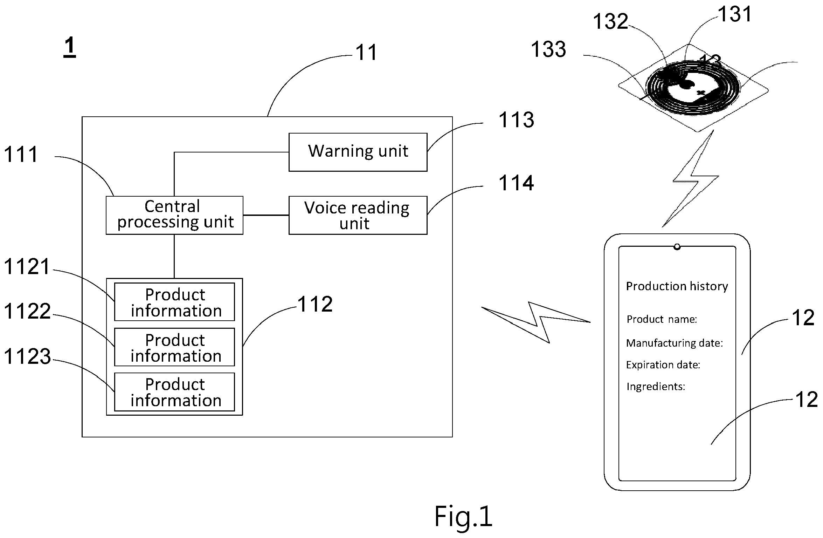

Referring to FIG. 1, a product information identification and sealed product ensuring system 1 consists essentially of a server 11, an information reading device 12, and an electronic label seal 13 for operation. The server 11 has a central processing unit 111 and a database 112 informationally connected to the central processing unit 111. The central processing unit 111 has a computing function. The database 112 stores a plurality of product informations (1121, 1122, 1123...). In an embodiment, there can further be a warning unit 113 informationally connected to the central processing unit 111 and configured to issue a warning command. In an embodiment, there can further be a voice reading unit 114 informationally connected to the central processing unit 111 and configured to convert content into an audio information.

The information reading device 12 has a near-field communication (NFC) sensing function, has at least functions such as wireless transmission and wireless communication, and has a display screen 121 for displaying an information. An example for the information reading device 12 is a smart phone. In addition, the information reading device 12 is preloaded with a corresponding application (APP) to execute related procedures in response to the information reading device 12 reading the electronic label seal 13.

The electronic label seal 13 is mainly composed of a conductive loop antenna 131 and a special adhesive 132 printed on the conductive loop antenna 131, allowing the conductive loop antenna 131 to be in a conductive state. Moreover, there is a pre-tear line 133 formed at a horizontal position relative to a circuit antenna 132.

In an embodiment of the present disclosure, the information reading device 12 first reads (senses in an NFC manner) the electronic label seal 13 using the NFC sensing function and obtains a unique identification code preloaded in the electronic label seal 13. The APP preloaded in the information reading device 12 connects to the server 11 to obtain a corresponding product information 1121.

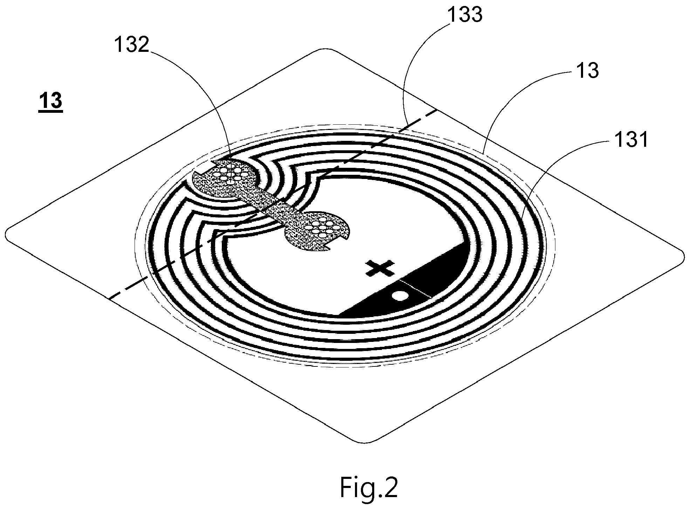

Referring to FIG. 2, the electronic label seal 13 has a printed conductive loop antenna 131 and a circuit antenna 132 printed on the conductive loop antenna 131 using a special adhesive. The circuit antenna 132 is made by mixing an adhesive that provides one-time adhesion with an electrically conductive metal so that the circuit antenna 132 itself is electrically conductive. After the circuit antenna 132 is printed on the conductive loop antenna 131, the circuit antenna 132 and the conductive loop antenna 131 can establish a conductive state. Furthermore, a pre-tear line 133 is formed horizontally across the circuit antenna 132. If the pre-tear line 133 is torn by external force, the circuit antenna 132 is simultaneously torn together. In this way, the conductive loop antenna 131 that is originally in the conductive state transitions to being in an open circuit state. Additionally, the electronic label seal 13 can be combined with a paper or film sticker 2 to enhance its applications in advertising and marketing.

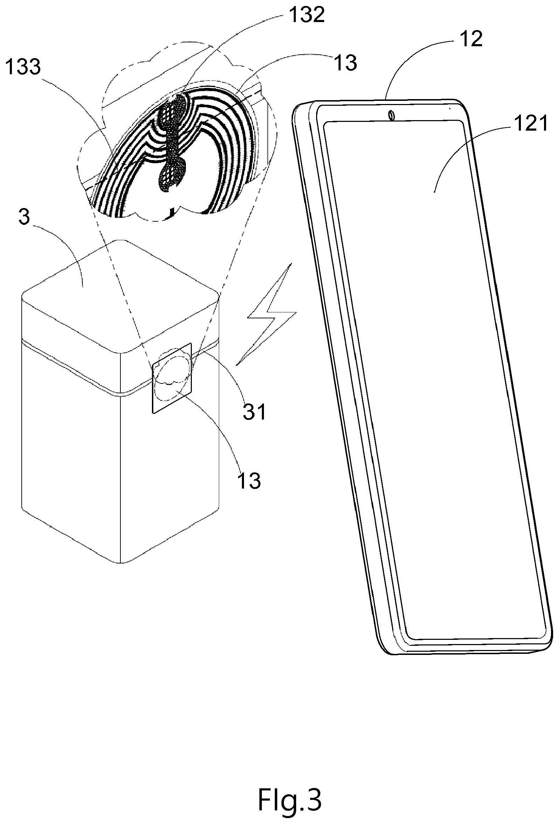

Referring to FIG. 3, the electronic label seal 13 can be attached to a sealing part 31 of the product 3 in such a way that the pre-tear line 133 precisely aligns in parallel with the sealing part 31. Each electronic label seal 13 is independently preloaded with a unique identification code (ID) to independently correspond to a product information (1121, 1122, 1123...). Moreover, the correspondence between the product information (1121, 1122, 1123...) and each electronic label seal 13 can be pre-established and stored in the database 112. In addition, content of the product information (1121, 1122, 1123...) can, for example, be a product name together with one of the following or a combination thereof: a place of origin, a manufacturing date, or an expiration date.

As illustrated in FIG. 3, a user (or a consumer) can use an information reading device (such as a smart phone) 12 to preload a corresponding APP. During implementation, the user uses the information reading device 12 to activate the NFC function, sense (read) the electronic label seal 13, and obtain the unique identification code preloaded in the electronic label seal 13. The APP uploads the unique identification code to the server 11. The central processing unit 111 retrieves a product information (such as the product information 1121) corresponding to the unique identification code from the database 112, and send it back to the information reading device 12. The product information 1121 is presented on the display screen 121. For example, a link can be displayed or the product information can be directly displayed on the display screen 121. Furthermore, the electronic label seal 13 can further be electrically equipped with a micro light-emitting diode (LED) light-emitting module. When the information reading device 12 successfully senses (reads) the electronic label seal 13, the micro LED light-emitting module can emit light.

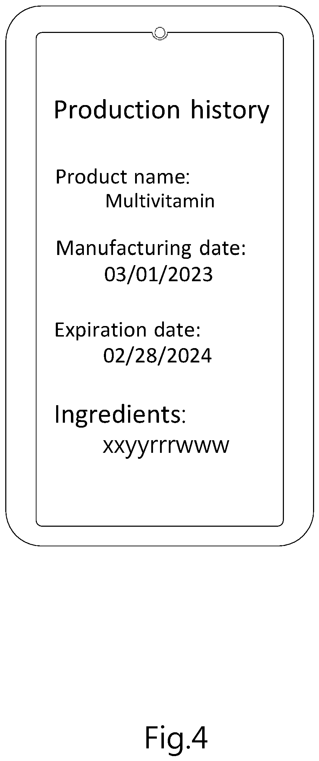

Referring to FIG. 4, the content of the product information 1121 is production history of a product, which can present at least a product name, a date information (a manufacturing date, an expiration date), ingredients, etc.

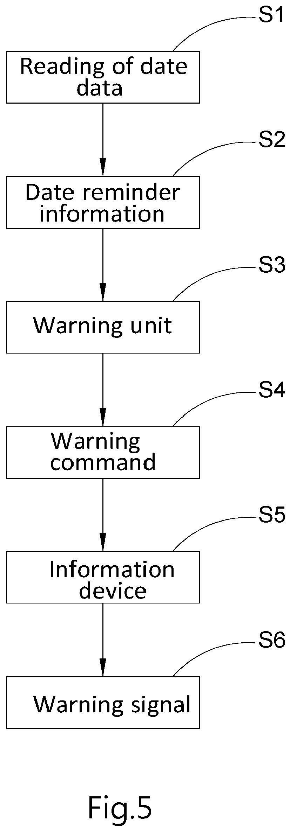

Referring to FIG.5 in conjunction with FIGs. 1 and 3, the central processing unit 111 can perform a "date data reading step S1" according to a date information (one of a manufacturing date or an expiration date) in a product information 1121, and generate a "date reminder information S2." The central processing unit 111 can execute a "warning unit driving step S3" according to the "date reminder information S2" so that the warning unit 113 performs a "warning command issuing step S4," and a "step S5 of transmitting the warning command to the information reading device". At this time, the information reading device proceeds to performing a "warning signal generating step S6." The warning signal can, for example, be any one of the following or a combination thereof: an image, a sound, or a light source, and is used to remind the user (consumer) to pay attention to the date information.

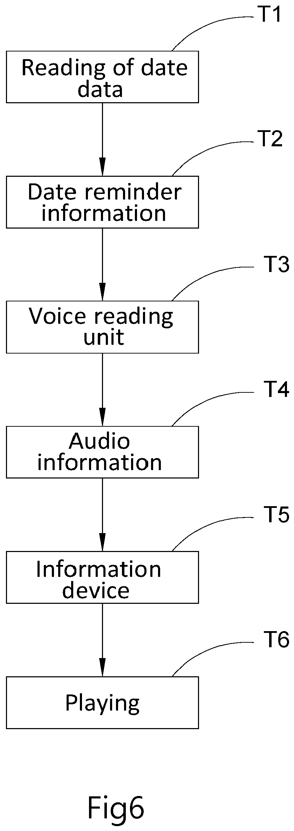

Referring to FIG. 6 in conjunction with FIGs. 1 and 3, the central processing unit 111 can perform a "date data reading step T1" according to a date information (one of a manufacturing date or an expiration date) in a product information 1121, and generate a "date reminder information T2. The central processing unit 111 can execute a "voice reading unit driving step T3" according to the "date reminder information T2" so that the voice reading unit 114 performs a "step T4 of converting the date information (one of a manufacturing date or an expiration date) into an audio information" and a "step S5 of transmitting the audio information to the information reading device." At this time, the information reading device 12 proceeds to performing a "playing step T6." The audio information can, for example, be any one of the following or a combination thereof: an image, a sound, or a light source, and is used to remind the user (consumer) to pay attention to the date information. For example, the information reading device 12 directly plays the following: "Please note that an expiration date of this product is on May 1, 2023."

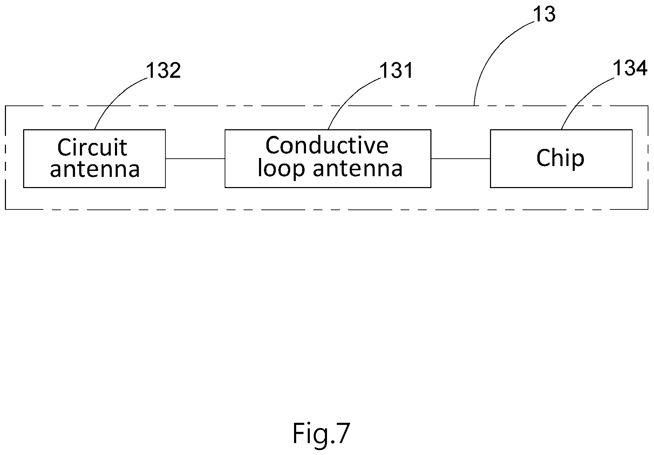

Referring to FIG. 7, the conductive loop antenna 131 in the electronic label seal 13 can further electrically and informationally connected to a chip 134 to increase an amount of information that can be loaded and stored. For example, one or a combination of a unique identification code, a product information link, a product information, a voice information, a text information, or an audio-visual information, preloaded in the electronic label seal 13, can be prestored in the chip 134. In this way, when the user uses the information reading device 13 to read the electronic label seal 13, content stored in the chip 134 can be obtained.

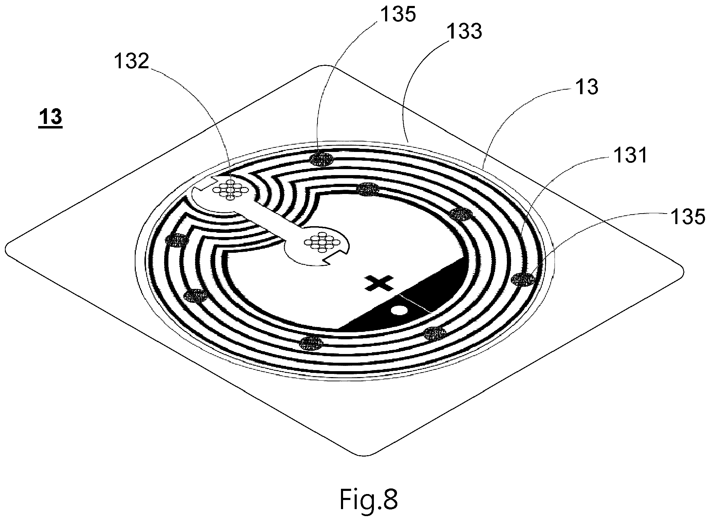

Referring to FIG. 8, when the electronic label seal 13 is manufactured, one or more adhesive dots 135 are formed by applying an adhesive respectively at one or more positions on the conductive loop antenna 131. Material of adhesive dots 135 is for one-time use and is a special adhesive having a strong adhesive property. When the electronic label seal 13 is attached, each adhesive dot 135 adheres to a surface of an object to which the electronic label seal 13 is attached. If the electronic label seal 13 is torn off by external force, at the same time when it is torn off, because of the strong adhesive property of each adhesive dot 135, each adhesive dot 135 causes a tensile damage to the conductive loop antenna 131 at the respective position of each adhesive dot 135, causing the electronic label seal 13 that is torn off to be unable to be reused because the electronic label seal 13 is open circuited. This also means that the product to which the electronic label seal 13 is originally attached has been opened.

As mentioned above, after the present disclosure is implemented, the following advantages can be achieved:
(1) The special adhesive of the electronic label seal is specially designed for one-time use, allowing the electronic label seal, once being attached to the product, to seal the product. If the electronic label seal is torn off, then the electronic label seal enters the open circuit state, damaging connection between the circuit antenna and the conductive loop antenna. As a result, the information reading device is unable to read the product information or transmit the signal. In this way, the consumer can confirm that a sealing aspect of this product has been damaged, and can reasonably question validity of this product.
(2) In another embodiment, if the electronic label seal has been torn and is in the open circuit state, the information reading device is unable to read the product information. Then, the application preloaded in the information reading device displays "This product has been opened" on the display screen to warn the user.
(3) When the electronic label seal is in a valid state, the information reading device can read the product information and proactively remind the user (consumer) of the date information in the product information, particularly the expiration date, through warning or playing voice.

In summary, the implementation of the present disclosure according to the above can indeed achieve the object of providing the product information identification and sealed product ensuring system that can present the product information, indicate the seal validity, and proactively remind of the expiration date of the product.

The above is only the preferred embodiments of the present disclosure, and is not intended to limit the present disclosure to the forms disclosed. Any modifications, equivalent alternatives, and improvements made within the spirit and the scope of present disclosure by persons skilled in the art should be included in the scope of claims of the present disclosure.

### Reference sign

- 1: a product information identification and sealed product ensuring system
- 11: a server
- 12: an information reading device
- 111: a central processing unit
- 121: a display screen
- 112: a database
- 1121- 1123: product informations
- 113: a warning unit
- 114: a voice reading unit
- 13: an electronic label seal
- 131: a conductive loop antenna
- 132: a circuit antenna
- 133: a pre-tear line
- 134: a chip
- 135: one or more adhesive dots
- 1: a sticker
- 3: a product
- 31: a sealing part
- S1: a date data reading step
- S2: a date reminder information
- S3: a warning unit driving step
- S4: a warning command issuing step
- S5: a step of transmitting the warning command to the information reading device
- S6: a warning signal generating step
- T1: a date data reading step
- T2: a date reminder information
- T3: a voice reading unit driving step
- T4: a step of converting the date information into an audio information
- T5: a step of transmitting the audio information to the information reading device
- T6: a playing step

## Claims

1. A product information identification and sealed product ensuring system configured to record an information link corresponding to a product, the system comprising:
an electronic label seal having a conductive loop antenna;
a circuit antenna which is electrically conductive and is formed by printing on the conductive loop antenna so that the circuit antenna and the conductive loop antenna of the electronic label seal establish a conductive state;
an information reading device configured to obtain the information link from reading the electronic label seal;
wherein in response to the information link being executed by the information reading device, a product information is displayed on a display screen of the information reading device.

2. The product information identification and sealed product ensuring system of Claim 1, wherein the circuit antenna is formed by printing a one-time-use special adhesive on the conductive loop antenna, the special adhesive provides one-time adhesion, and once the special adhesive is attached and then torn off, the circuit antenna loses the adhesion, and the conductive circuit is damaged, causing the conductive loop antenna to be in an open circuit state.

3. The product information identification and sealed product ensuring system of Claim 2, wherein when the conductive loop antenna is in the open circuit state, the information reading device is unable to obtain the information link, and the display screen of the information reading device shows that the electronic label seal has been broken.

4. The product information identification and sealed product ensuring system of Claim 1, the conductive loop antenna of the electronic label seal is electrically connected to a micro light-emitting diode (LED) light-emitting module.

5. The product information identification and sealed product ensuring system of Claim 1, wherein the product information comprises at least a unique identification code.

6. The product information identification and sealed product ensuring system of Claim 1, wherein the product information comprises at least a product name together with one of the following or a combination thereof: a place of origin, a manufacturing date, or an expiration date.

7. The product information identification and sealed product ensuring system of Claim 1, wherein the product information is stored in a database of a server, the sever having a central processing unit and at least a warning unit informationally connected to the central processing unit.

8. The product information identification and sealed product ensuring system of Claim 7, wherein the central processing unit can generate a date reminder information according to one of a manufacturing date or an expiration date in the product information, the central processing unit can drive the warning unit to issue a warning command based on the date reminder information, the warning command can be transmitted to the information reading device for presentation, and the information reading device generates a warning signal, the warning signal being any one of the following or a combination thereof: an image, a sound, or a light source.

9. The product information identification and sealed product ensuring system of Claim 1, wherein the product information is stored in a database of a server, the sever having a central processing unit and at least a voice reading unit informationally connected to the central processing unit, wherein based on any content in the product information, the central processing unit can cause the voice reading unit to convert the content into an audio information, the audio information can be transmitted to the information reading device for presentation, and the information reading device plays the audio information.

10. The product information identification and sealed product ensuring system of Claim 9, wherein the content of the product information comprises at least a product name together with one of the following or a combination thereof: a place of origin, a manufacturing date, or an expiration date.

11. The product information identification and sealed product ensuring system of Claim 9, wherein the central processing unit can cause the voice reading unit to convert any one of an image information, a sound information or an audio-visual information that is pre-recorded and is stored in the database into a dynamic audio-visual information, the dynamic audio-visual information can be transmitted to the information reading device, and the information reading device plays the dynamic audio-visual information.

12. The product information identification and sealed product ensuring system of Claim 1, wherein the conductive loop antenna is further electrically and informationally connected to a chip to increase an amount of information that can be loaded and stored.

13. The product information identification and sealed product ensuring system of Claim 12, wherein the chip can preload and store one of the following or a combination thereof: a unique identification code, a product information link, a product information, a voice information, a text information, or an audio-visual information.

14. The product information identification and sealed product ensuring system of Claim 1, wherein there are one or more adhesive dots formed respectively at one or more positions on the conductive loop antenna, the one or more adhesive dots being for one-time use and made of a special adhesive having a strong adhesive property, wherein when the electronic label seal is torn off by external force, because of the strong adhesive property of each adhesive dot, each adhesive dot causes a tensile damage to the conductive loop antenna at the respective position of each adhesive dot, causing the conductive loop antenna of the electronic label seal that is torn off to be unable to be reused because the conductive loop antenna is open circuited.

15. An electronic label seal used by a product information identification and sealed product ensuring system and configured to store an information link corresponding to a product, the electronic label seal comprising:
a conductive loop antenna;
a circuit antenna which is informationally connected to the conductive loop antenna, the circuit antenna and the conductive loop antenna establishing a conductive state; and
one or more adhesive dots formed respectively at one or more positions on the conductive loop antenna, the one or more adhesive dots being for one-time use and having a strong adhesive property.

16. The electronic label seal of Claim 15, wherein from reading the electronic label seal, an information reading device can obtain the information link, and in response to the information link being executed by the information reading device, a product information can be displayed on a display screen of the information reading device.

17. The electronic label seal of Claim 15, wherein when the electronic label seal is torn off by external force, because of the strong adhesive property of each adhesive dot, each adhesive dot causes a tensile damage to the conductive loop antenna at the respective position of each adhesive dot, causing the conductive loop antenna of the electronic label seal that is torn off to be unable to be reused because the conductive loop antenna is open circuited.

18. The electronic label seal of Claim 15, wherein the conductive loop antenna is further electrically and informationally connected to a chip to increase an amount of information that can be loaded and stored.

19. The electronic label seal of Claim 18, wherein the chip can preload and store one of the following or a combination thereof: a unique identification code, a product information link, a product information, a voice information, a text information, or an audio-visual information.
